# EUROPÄISCHE PATENTSCHRIFT

(11) **EP 1 074 412 B1**
(45) Veröffentlichungstag und Bekanntmachung des Hinweises auf die Patenterteilung: **27.09.2006**
(21) Anmeldenummer: 00115536.5
(22) Anmeldetag: 19.07.2000
(51) Int. Cl.: B60J 5/00, B62D 29/00, B60R 13/04

(54) **Schutzüberzug für einen Blechfalz**
Protective coating for sheet metal fold
Revêtement de protection pour pliage de tôle

(30) Priorität: 03.08.1999 DE 19936389
(43) Veröffentlichungstag der Anmeldung: 07.02.2001
(73) Patentinhaber: Volkswagen Aktiengesellschaft, 38436 Wolfsburg (DE)
(72) Erfinder: Lau, Norbert, 38442 Wolfsburg (DE); Reitmeier, Heinz-Jürgen, 38442 Wolfsburg (DE); Langer, Jan Werner, Dipl.-Ing., 38448 Wolfsburg (DE)

(56) Entgegenhaltungen:
- US-A- 4 570 383
- US-A- 4 581 807
- US-A- 4 679 290

## Beschreibung

Die vorliegende Erfindung betrifft ein Verfahren zur Beschichtung eines Kraftfahrzeug-Bauteils mit einem Blechfalz, wobei das Bauteil einer Elektrotauchlackierung unterzogen wird und daran anschließend ein Decklack aufgetragen wird.

Bei Blechfalzen handelt sich um die Verbindungsstellen von Blechrändern, die umgebogen und zusammengepresst werden. Solche Blechfalze treten im Fahrzeugbau an zahlreichen Stellen der Karosserie auf. Beispielhaft sei der Außenrand einer Kraftfahrzeugtür genannt, bei welcher das Türinnenblech und das Türaußenblech zusammentreffen und das Türaußenblech unter Bildung eines Blechfalzes um den Rand des Türinnenbleches herum umgebogen ist. Derartige Blechfalze stellen aufgrund der scharfen Knicke, der Blechkanten und der freiliegenden Stirnseiten der Bleche leichte Angriffspunkte für eine Korrosion dar. Zur Erhöhung der Haltbarkeit der Karosserie werden daher Blechfalze in der Regel mit einem besonderen Schutzüberzug versehen.

Eine Art des Schutzüberzuges von Blechfalzen, welche z.B. beim sogenannten Unterbodenschutz verwendet wird, besteht in einem Auftrag einer Pulverlackschicht, welche eine größere Dicke als die übliche Lackschicht der Karosserie hat. Der Auftrag einer solchen Pulverlackschicht im engen und stark gekrümmten bzw. gekanteten Bereich eines Blechfalzes ist jedoch im allgemeinen sehr problematisch.

Aus der US-A-4570 383 ist bereits ein Schutzüberzug für die äußere Oberfläche eines Blechfalzes bekannt, der als Folie ausgebildet ist.

Eine andere aus dem Stand der Technik bekannte Art des Schutzüberzuges besteht im Auftrag einer Dichtungsmasse. Diese kann z.B. auf dem Blechfalz aufgespritzt werden. Aufgrund ihres Aussehens wird die Dichtungsmasse auch als sogenannte "Raupe" bezeichnet. Sie kann insbesondere aus Polyvinylchlorid (PVC) oder Acrylat bestehen. Nachteilig an einem derartigen Schutzüberzug in Form einer Raupe ist jedoch, daß dieser aufgrund seiner Ausdehnung anderen Elementen im Wege stehen kann. Dies ist insbesondere bei den Fahrzeugtüren in bezug auf die Dichtungen der Fall. Dort befindet sich zudem die Raupe im Sichtbereich, so daß sie auch in optischer Hinsicht störend wirkt.

Aufgabe der vorliegenden Erfindung war es, ein Verfahren zur Beschichtung des Blechs eines Blechfalzes zur Verfügung zu stellen, welches einen guten Schutz des Blechfalzes gewährleisten.

Diese Aufgabe wird durch ein Verfahren gemäß Anspruch 1 gelöst.

Das Aufbringen einer Folie über einen Blechfalz begegnet in der Durchführung keinen besonderen Schwierigkeiten. Insbesondere läßt es sich robotergesteuert durchführen und eignet sich somit für eine automatisierte Produktion. Hierdurch können die Herstellungskosten gesenkt werden, wobei zugleich ein sehr präzises und reproduzierbares Ergebnis gewährleistet ist. Reproduzierbarkeit wird nicht zuletzt auch dadurch garantiert, daß die Folie definierte Eigenschaften wie z.B. eine gleichbleibende Dicke aufweist. Anders als bei einem Pulverlack ist die Gefahr produktionsbedingter Schwachstellen äußerst gering. Andererseits beansprucht die Folie im Gegensatz zu einer Raupe aus Dichtungsmasse nur eine verschwindend geringe Schichtdicke, so daß sie anderen Elementen nicht im Wege steht und auch optisch nicht störend auffällt.

Der erfindungsgemäße Schutzüberzug aus einer Folie wird vorzugsweise an dem Blechfalz am Rand einer Kraftfahrzeugtüre vorgesehen. An dieser Stelle machen sich die positiven Eigenschaften der Folie besonders bemerkbar, da dort einerseits ein Platzbedarf für herkömmliche Wasser- und Geräuschdichtungen der Tür besteht und andererseits der entsprechende Blechfalz sichtbar ist, so daß es auf ein optisch akzeptables Erscheinungsbild ankommt.

Die Folie kann aus Kunststoff hergestellt sein, wobei hierfür vorzugsweise Polyvinylchlorid (PVC) oder Polyethylen (PE) in Frage kommen. Die genannten Materialien sind einerseits kostengünstig und erfüllen andererseits in zufriedenstellendem Maße ihre Schutzfunktion. Weiterhin ist die Folie vorzugsweise selbstklebend ausgestaltet, so daß sie besonders einfach auf den Blechfalz aufgetragen werden kann. Bei einer selbstklebenden Folie ist kein separates Aufbringen eines Klebers notwendig, so daß ein zusätzlicher Arbeitsschritt entfällt. Andererseits behält die selbstklebende Folie die ihr einmal gegebene Positionierung bei, bis sie gegebenenfalls in einem späteren Arbeitsschritt endgültig fixiert wird.

Ferner ist die genannte Folie vorteilhafterweise lackierbar. Die Folie kann dann bei der späteren Verarbeitung genauso behandelt werden wie das sie umgebende Material. Insbesondere kann sie dieselbe Lackierung wie das restliche Bauteil erhalten, so daß sie optisch nicht in Erscheinung tritt.

Die Dicke der Folie kann in einem Bereich von 40 bis 500 µm, vorzugsweise von 80 bis 350 µm, besonders bevorzugt von 100 bis 300 µm liegen. Die genannten Werte gewährleisten einerseits einen ausreichenden Schutz des zu überdeckenden Blechfalzes, andererseits hebt sich die Folie damit nicht oder kaum aus der übrigen Lackschicht hervor. Weiterhin ist eine Folie mit den genannten Dicken gut handhabbar, da sie eine ausreichende Eigenstabilität besitzt.

Vorzugsweise wird die Folie auf das Blech aufgeschmolzen. Die Verbindung zwischen Folie und Blech wird dann besonders innig, so daß die Folie hervorragend ihre Schutzwirkung ausüben kann.

Die Erfindung betrifft also ein Verfahren zur Beschichtung eines Kraftfahrzeug-Bauteils mit einem Blechfalz, wobei das Bauteil einer Elektrotauchlackierung, vorzugsweise einer kathodischen Elektrotauchlackierung (KTL), unterzogen wird und daran anschließend ein Decklack aufgetragen wird. Erfindungsgemäß ist dieses Verfahren dadurch gekennzeichnet, daß vor der Elektrotauchlackierung eine Folie als Schutzüberzug über den Blechfalz gelegt wird.

Mit dem genannten Verfahren läßt sich ein Schutzüberzug für einen Blechfalz erzeugen, welcher die oben beschriebenen Vorteile aufweist. Die Folie wird dabei vor der Elektrotauchlackierung und vor dem Aufbringen des Decklackes aufgetragen. Ein erfindungsgemässer Auftrag der Folie vor der Elektrotauchlackierung wird vor allem dann in Frage kommen, wenn die Folie gute Hafteigenschaften auf dem Blech bei gleichzeitig guter Haftung des überdeckenden Elektrotauchlackes aufweist. Dagegen wird nicht erfindungsgemäss ein Auftrag der Folie nach der Elektrotauchlackierung dann in Betracht zu ziehen sein, wenn die Folie gut auf dem Elektrotauchlack haftet und andererseits eine gute Haftung des Decklackes gewährleistet. Die Reihenfolge des Auftrages richtet sich somit danach, daß die Schichten Blech, Elektrotauchlack, Folie und Decklack insgesamt gesehen eine besonders hohe Haftung untereinander bekommen.

Vorzugsweise wird bei dem Verfahren die Folie aufgeklebt. Ein Aufkleben läßt sich einerseits besonders einfach und insbesondere automatisiert durchführen, andererseits führt es unmittelbar zu einer sicheren Positionierung der Folie.

In einer Weiterbildung des Verfahrens wird die Folie mit dem Blechfalz verschmolzen. Hierdurch entsteht eine besonders innige Verbindung zwischen Folie und Blech bzw. Folie und Elektrotauchlack, welche einen sicheren Sitz des Schutzüberzuges gewährleistet. Das Material für die Folie ist dabei vorzugsweise thermoplastisch und erweicht bei Temperaturen zwischen etwa 150 und 300°C. Das Verschmelzen der Folie mit dem Blechfalz kann vorzugsweise während der Ofentrocknung des Decklackes stattfinden. In diesem Falle ist für den Verschmelzungsvorgang kein eigener Bearbeitungsprozeß erforderlich, da die ohnehin durchzuführende Ofentrocknung hierfür ausgenutzt wird.

Im folgenden wird die Erfindung mit Hilfe der Figuren beispielhaft erläutert.
Figur 1 zeigt eine Kraftfahrzeugtür in der Seitenansicht.
Figur 2 zeigt einen Schnitt entlang der Linie II-II nach Figur 1.
Figur 3 zeigt vergrößert den Ausschnitt III von Figur 1.

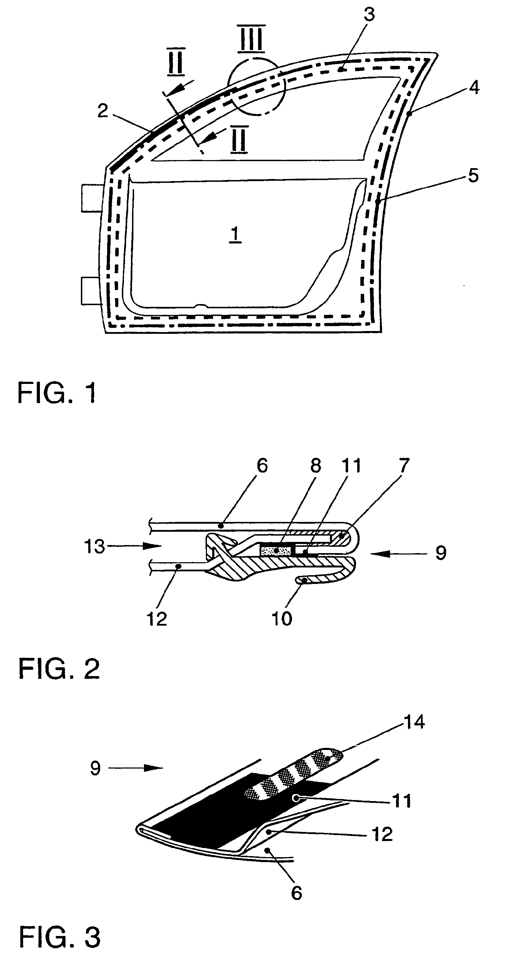

In Figur 1 ist die Seitenansicht einer Kraftfahrzeugtür 1 dargestellt. Durch eine um den Rand der Tür umlaufende gestrichelte Linie 3 wird der Verlauf eines Hauptdichtungsbandes zur Geräusch- und Wasserdichtung symbolisiert. Die parallel hierzu umlaufende Linie 5 deutet den Verlauf eines Blechfalzes an, welcher den Rand der Tür 1 bildet.

Weiterhin ist ein auf der Linie 5 gelegener Abschnitt im vorderen oberen Bereich der Tür hervorgehoben. Dort kann zusätzlich zum Hauptdichtungsband 3 an der Türöffnung und/oder der Tür ein Nebendichtungsband 2 angeordnet sein, welches zumindest abschnittsweise parallel zum Hauptdichtungsband verläuft und vom Türmittelpunkt aus gesehen weiter außen als das Hauptdichtungsband angeordnet ist. Mit dem Nebendichtungsband gelingt es, insbesondere kritische Bereiche an der Tür hinreichend abzudichten, so daß sie auch bei hohen Fahrzeuggeschwindigkeiten und eventuell auftretenden Verwindungen der Karosserie eine ausreichende Abdichtung der Tür gewährleisten. Das Nebendichtungsband ist dabei radial, d.h. vom Türmittelpunkt ausgehend, weiter außen als das Hauptdichtungsband angeordnet. Das Hauptdichtungsband kann somit ohne Änderungen einem üblichen Verlauf folgen, da das Nebendichtungsband in einem bisher ungenutzten und daher freistehenden Bereich angeordnet wird. In diesem äußeren Bereich bewirkt das Nebendichtungsband einen ersten Schutz gegen Nässe, Fahrtwind und Schall, wodurch das Hauptdichtungsband in diesen Bereichen entlastet wird und somit auch bei höheren Beanspruchungen eine vollständige Abdichtung gewährleisten kann. Vorzugsweise wird das Nebendichtungsband im in Fahrtrichtung gesehen vorderen Bereich der Tür bzw. Türöffnung angeordnet. Dieser vordere Bereich der Tür ist einerseits primär dem Fahrtwind ausgesetzt, andererseits befinden sich dort die Türscharniere, so daß eventuelle Verwindungen der Karosserie sich in diesem Bereich am stärksten auswirken. Weiterhin wird das Nebendichtungsband vorzugsweise im oberen Bereich der Tür bzw. Türöffnung angeordnet. Auch für den oberen Bereich der Tür gilt, daß dieser im Vergleich zur unteren Türhälfte höheren Belastungen hinsichtlich des auftreffenden Fahrtwindes ausgesetzt ist. Außerdem kommt diesem Bereich vorrangige Bedeutung bei der Abdichtung gegen Regen zu. Der obere Bereich der Tür erfordert daher besonders eine zusätzliche Abdichtung durch das Nebendichtungsband. Das Nebendichtungsband beginnt dabei vorteilhafterweise etwa oberhalb der halben Fensterhöhe des in Fahrtrichtung gesehenen hinteren Fensterholmes. Von hier ausgehend verläuft es vorzugsweise um das Fenster herum bis in den Bereich der Motorhaube. Bei einer derartigen Anordnung des Nebendichtungsbandes wird in effizienter Weise der Hauptbelastungsbereich abgedichtet, ohne daß überschüssigerweise Dichtungsmaterial verbraucht würde. Eine derartige Abdichtung liegt somit im Optimum des Kosten/Nutzenverhältnisses. Es hat sich weiterhin als vorteilhaft herausgestellt, wenn das Hauptdichtungsband und das Nebendichtungsband an verschiedenen Teilen angeordnet sind. Das heißt, daß das Hauptdichtungsband an der Tür und das Nebendichtungsband an der Türöffnung angeordnet sein kann, oder daß sich umgekehrt das Nebendichtungsband an der Tür und das Hauptdichtungsband an der Türöffnung befinden kann. Eine derartige reziproke Anordnung der Dichtungsbänder ist unter anderem deshalb vorteilhaft, weil damit gewährleistet ist, daß an jedem der Elemente Tür bzw. Türöffnung mindestens ein Dichtungsband fest angeformt ist. Aufgrund dieser festen Verbindung kann somit prinzipiell kein Spalt zwischen Dichtungsband und entsprechendem Element entstehen.

Figur 2 zeigt einen Schnitt entlang der Linie II-II nach Figur 1, woraus der Aufbau des Blechfalzes 9 erkennbar wird. Der Blechfalz wird gebildet aus einem Innenblech 12 und einem Außenblech 6, wobei das Außenblech 6 um den Rand des Innenbleches 12 umgebogen ist. Außenblech 6 und Innenblech 12 sind im Bereich des Blechfalzes 9 durch einen Kleber 7 miteinander verklebt. Bei dem Kleber kann es sich insbesondere um PVC, einen Epoxidkleber oder ein Gemisch hiervon handeln. Die Verklebung 7 trägt erheblich zum Korrosionsschutz des Blechfalzes 9 bei. Wichtig ist, daß kein Kleber 7 aus dem Blechfalz herausquillt, damit ein Verschmutzen der Werkzeuge vermieden wird und auf den Blechaußenflächen eine saubere Auflage und eine gute Haftung für dort noch aufzubringende Beschichtungen besteht. Derartige Beschichtungen können z.B. in einer (kathodischen) Elektrotauchlackschicht, in einer Pulverlackschicht, in einer Folie oder in einer sogenannten "Raupe" aus Dichtungsmasse bestehen. Häufig wird die verklebte Blechfalz vorgeliert, wodurch eventuell ausgetretenes PVC abkratzbar wird bzw. Epoxid erhärtet.

Die Stirnseite des Außenbleches 6 wird im Bereich des Blechfalzes 9 durch eine Folie 11 abgedeckt. Diese Folie hat typischerweise eine Dicke von 100 bis 300 µm und ist selbstklebend und überlackierbar. Vorzugsweise besteht sie aus PVC oder Polyethylen (PE). Eine derartige Folie kann von einem Roboter aufgetragen werden, da sie gut handhabbar ist. Die Folie 11 stellt einen wirksamen Schutzüberzug über der Blechkante dar. Durch Verschmelzen mit den Blechen 6, 12 kann eine besonders innige und gut haftende Verbindung zur Folie hergestellt werden.

Die in Figur 2 dargestellte Türaußenkante besitzt weiterhin eine Dichtung 10, welche für eine Geräusch- und Wasserdichtung der Tür 1 in der Türöffnung der Karosserie sorgt. Die Dichtung 10 kann insbesondere mit der Blechfalz 9 bzw. dem Türinnenblech 12 verklebt sein. Dies kann z.B. über ein Doppelklebeband 8 zwischen Dichtung 10 und Folie 11 geschehen. Weiterhin ist in Figur 2 zu erkennen, daß die Dichtung 10 mit einem Pilzkopf 13 durch ein Loch im Innenblech 12 gesteckt und damit in einer Steckverbindung nach Art eines Clips verankert ist. Alternativ oder zusätzlich hierzu kann auch ein Kleber durch eine Öffnung in der Dichtung in den Zwischenraum zwischen Dichtung und Tür gespritzt werden.

In Figur 3 ist der in Figur 1 mit der Ziffer III versehene Ausschnitt vergrößert und perspektivisch dargestellt. Zu erkennen sind das Außenblech 6, welches das Innenblech 12 an dessen Rand unter Ausbildung eines Blechfalzes 9 umgibt. Ferner ist erkennbar, daß die hierdurch gebildete offene Stirnseite des Bleches von einer Folie 11 abgedeckt wird. Als sich daran anschließendes Dichtungselement ist in Figur III eine sogenannte Raupe 14 aus einer Dichtungsmasse erkennbar. Diese Raupe wird in der Regel durch ein Spritzverfahren aufgebracht. In der in Figur 1 dargestellten Anordnung kann durch die Raupe insbesondere das Hauptdichtungsband 5 der Tür verwirklicht werden. Im Bereich des Abschnittes mit der Ziffer 2 wird dieses Hauptdichtungsband durch ein zusätzliches Nebendichtungsband verstärkt.

Die Beschichtung einer Fahrzeugtür 1 bzw. einer Fahrzeugkarosserie verläuft in der Regel so, daß zunächst eine kathodische Tauchlackierung (KTL) durchgeführt wird, wobei zum Schutz gegen Korrosion eine sehr dicke Tauchlackschicht aufgebracht werden kann. Diese Tauchlackschicht wird bei einer Temperatur von ca. 180°C +/- 20°C getrocknet. Anschließend wird optional ein Füller aufgebracht und bei ca. 160°C +/- 20°C getrocknet. Zuletzt erfolgt der Auftrag des Decklackes, welcher sich aus Basecoat und Clearcoat zusammensetzt und welcher bei ca. 140°C +/- 20°C getrocknet wird. Das Aufkleben der Folie 11 erfolgt vor der KTL. Die Folie wird dabei vorzugsweise bei den nachfolgenden Trocknungsvorgängen unter erhöhten Temperaturen auf ihren Untergrund aufgeschmolzen.

Beim Verlegen der Folie sind zu große Knicke (Richtungswechsel) zu vermeiden. Das heißt, daß bei einem Knick im Verlauf des Blechfalzes von weniger als 120°, insbesondere von weniger als 90° das Verlegen eines Folienstreifen beendet werden sollte und ein neuer Folienstreifen begonnen werden sollte. Der Verbindungsbereich zwischen den beiden Folienstreifen kann dabei durch Überstreichen mit z.B. PVC (oder einem anderen Raupenmaterial) abgedichtet werden. Ebenso kann die Verbindungsstelle mit einem Auftrag von Pulverlack geschützt werden. Knickstellen der genannten Art sind insbesondere bei den Fahrzeugtüren im Bereich der vier Ecken vorhanden.

### BEZUGSZEICHENLISTE

- 1: Kraftfahrzeugtür
- 2: Nebendichtungsband
- 3: Hauptdichtungsband
- 4: Fensterholm
- 5: Blechfalz
- 6: Außenblech
- 7: Verklebung
- 8: Doppelklebeband
- 9: Blechfalz
- 10: Dichtung
- 11: Folie
- 12: Innenblech
- 13: Steckverbindung
- 14: Raupe

## Patentansprüche

1. Verfahren zur Beschichtung eines Kraftfahrzeug-Bauteils mit einem Blechfalz (9), wobei das Bauteil einer Elektrotauchlackierung unterzogen wird und daran anschließend ein Decklack aufgetragen wird, **dadurch gekennzeichnet, dass** vor der Elektrotauchlackierung eine Folie (11) über den Blechfalz (9) gelegt wird.

2. Verfahren nach Anspruch 1, **dadurch gekennzeichnet, dass** die Folie (11) aufgeklebt wird.

3. Verfahren nach einem der Ansprüche 1 oder 2, **dadurch gekennzeichnet, dass** die Folie (11) mit dem Blechfalz (9) verschmolzen wird, was vorzugsweise während der Ofentrocknung des Decklackes erfolgt.

4. Verfahren nach Ansprüchen 1 bis 3, **dadurch gekennzeichnet, dass** der Blechfalz (9) den Rand einer Kraftfahrzeugtür (1) bildet.

5. Verfahren nach einem der Ansprüche 1 bis 4, **dadurch gekennzeichnet, dass** die Folie (11) aus Kunststoff, vorzugsweise aus Polyvinylchlorid oder Polyethylen, besteht.

6. Verfahren nach einem der Ansprüche 1 bis 5, **dadurch gekennzeichnet, dass** die Folie (11) selbstklebend ist.

7. Verfahren nach einem der Ansprüche 1 bis 6, **dadurch gekennzeichnet,** das die Folie (11) eine Dicke von 40 bis 500 µm, vorzugsweise von 80 bis 350 µm, besonders bevorzugt von 100 bis 300 µm aufweist.

## Claims

1. Method of coating a motor vehicle component having a panel fold (9), the component being subjected to electrocoating and subsequently a topcoat being applied, **characterized in that**, prior to electrocoating, a film (11) is placed over the panel fold (9).

2. Method according to Claim 1, **characterized in that** the film (11) is applied by adhesive bonding.

3. Method according to either of Claims 1 and 2, **characterized in that** the film (11) is fused with the panel fold (9), preferably during the oven drying of the topcoat.

4. Method according to Claims 1 to 3, **characterized in that** the panel fold (9) forms the edge of a motor vehicle door (1).

5. Method according to any one of Claims 1 to 4, **characterized in that** the film (11) is composed of polymer, preferably of polyvinyl chloride or polyethylene.

6. Method according to any one of Claims 1 to 5, **characterized in that** the film (11) is self-adhesive.

7. Method according to any one of Claims 1 to 6, **characterized in that** the film (11) has a thickness of 40 to 500 µm, preferably of 80 to 350 µm, more preferably of 100 to 300 µm.

## Revendications

1. Procédé pour le revêtement d'une pièce de véhicule automobile avec sertissage de tôles (9) où la pièce est soumise à une peinture électrophorétique par immersion et est ensuite recouverte d'une peinture finale, **caractérisé en ce qu'**un film (11) est posé sur le sertissage de tôles (9) avant la peinture électrophorétique par immersion.

2. Procédé selon la revendication 1, **caractérisé en ce que** le film (11) est collé.

3. Procédé selon l'une quelconque des revendications 1 ou 2, **caractérisé en ce que** le film (11) est fondu avec le sertissage des tôles (9), ce qui a lieu de préférence pendant le séchage au four de la peinture finale.

4. Procédé selon les revendications 1 à 3, **caractérisé en ce que** le sertissage de tôles (9) forme le bord d'une porte de véhicule automobile (1).

5. Procédé selon l'une quelconque des revendications 1 à 4, **caractérisé en ce que** le film (11) est fabriqué en plastique, de préférence en chlorure de polyvinyle ou en polyéthylène.

6. Procédé selon l'une quelconque des revendications 1 à 5, **caractérisé en ce que** le film (11) est autocollant.

7. Procédé selon l'une quelconque des revendications 1 à 6, **caractérisé en ce que** le film (11) présente une épaisseur de 40 à 500 µm, de préférence entre 80 et 350 µm et, de manière particulièrement préférée, entre 100 et 300 µm.
